Europäisches Patentamt

European Patent Office

Office européen des brevets

(11) Veröffentlichungsnummer: **0 461 471 A2**

## (12) EUROPÄISCHE PATENTANMELDUNG

(21) Anmeldenummer: **91108761.7**

(22) Anmeldetag: **29.05.91**

(51) Int. Cl.5: **B09B 1/00**, E02D 31/00

(30) Priorität: **12.06.90 DE 4018822**
**12.06.90 DE 4018824**

(43) Veröffentlichungstag der Anmeldung:
**18.12.91 Patentblatt 91/51**

(84) Benannte Vertragsstaaten:
**AT CH DE DK ES FR GB IT LI NL SE**

(71) Anmelder: **Paurat, Friedrich Wilhelm**
**Kasselweg 29**
**W-4230 Wesel 1(DE)**

Anmelder: **Paurat, Roland, Dipl.-Ing.**
**Blumenstrasse 11**
**W-4230 Wesel 13(DE)**

(72) Erfinder: **Paurat, Friedrich Wilhelm**
**Kasselweg 29**
**W-4230 Wesel 1(DE)**
Erfinder: **Paurat, Roland, Dipl.-Ing.**
**Blumenstrasse 11**
**W-4230 Wesel 13(DE)**

(74) Vertreter: **Andrejewski, Walter et al**
**Patentanwälte Andrejewski, Honke & Partner**
**Postfach 10 02 54 Theaterplatz 3**
**W-4300 Essen 1(DE)**

(54) **Verfahren zur Sicherung einer Deponie und Maschinenanordnung für die Durchführung des Verfahrens.**

(57) Verfahren zur Sicherung einer Deponie durch ein die Deponie ausreichend unterfassendes und einfassendes unterirdisches Abdichtungsbauwerk, welches mit bergbautechnischen Hilfsmitteln eingebracht wird und eine in Längsrichtung des Abdichtungsbauwerkes verlaufende Hauptstrecke sowie an zumindest einer Seite einen an die Hauptstrecke angeschlossenen, nach übertage geführten Schlitzraum aufweist. In dem Schlitzraum sind ein Verfüllstoff sowie ggf. Abdichtungsbauelemente und/oder Drainageelemente angeordnet. Der Schlitzraum wird quer zur Hauptstrecke sowie von der Hauptstrecke ausgehend nach übertage als bergbautechnischer Strebbetrieb mit Strebmaschinen in Form einer Hereingewinnungsmaschine, einer Fürdereinrichtung und eines Ausbaus aufgefahren. Die Strebmündung ist in der Hauptstrecke angeordnet. Der Strebmund tritt zutage. Das mit der Hereingewinnungsmaschine hereingewonnene Gestein wird mit Hilfe der Fördereinrichtungen über die Strebmündung in die Hauptstrecke eingeführt und in dieser nach übertage verbracht. Zumindest der Verfüllstoff des Abdichtungsbauwerkes ist über den übertägigen Strebmund in den Schlitzraum einführbar. - Auch eine Maschinenanordnung wird angegeben.

Fig. 2

Die Erfindung betrifft ein Verfahren zur Sicherung einer Deponie durch ein die Deponie ausreichend unterfassendes und einfassendes unterirdisches Abdichtungsbauwerk, welches mit bergbautechnischen Hilfsmitteln eingebracht wird und eine in Längsrichtung des Abdichtungsbauwerkes verlaufende Hauptstrecke sowie an zumindest einer Seite einen an die Hauptstrecke angeschlossenen, nach übertage geführten Schlitzraum aufweist, wobei in dem Schlitzraum ein Verfüllstoff sowie gegebenenfalls Abdichtungsbauelemente und/oder Drainageelemente angeordnet sind. - Sicherung einer Deponie bedeutet im Rahmen der Erfindung, daß eine bereits bestehende Deponie, insbesondere eine Sonderdeponie, mit Hilfe eines unterirdischen Abdichtungsbauwerkes so gekapselt wird, daß kontaminierende Substanzen, die in den deponierten Abfallstoffen enthalten sind oder gebildet werden, nicht in störendem Maße freikommen und nicht, beispielsweise Grundwasser gefährdend, vagabundieren können. Gestein bezeichnet jeden Untergrund und jede Umgebung der Deponie, unabhängig vom Ursprung und von der geologischen Beschaffenheit, also auch Sand, Mergel, Ton und Lehm. Verfüllstoff bezeichnet alle Baustoffe, die in der Lage sind, den Schlitzraum ausreichend aufzuhalten und die allein und/oder in Verbindung mit Abdichtungselementen und/oder Drainageelementen ein Abdichtungsbauwerk bilden, welches in abdichtungstechnischer Hinsicht den Anforderungen genügt. Abdichtungselemente sind z. B. Abdichtungsfolien. Drainageelemente dienen dazu, anfallendes kontaminiertes Sickerwasser kontrolliert abzuführen. Bergbautechnische Hilfsmittel bezeichnet Maschinen und Einrichtungen wie sie im untertägigen Steinkohlenbergbau üblich sind. Die Erfindung verwendet insoweit auch die bergbauübliche Terminologie.

Bei dem bekannten Verfahren, von dem die Erfindung ausgeht (DE-OS 36 17 956), wird der Schlitzraum parallel zur Hauptstrecke vorgetrieben, und zwar in Form von nebeneinander angeordneten, tunnelartigen Abschnitten mit entsprechendem, vortriebsschildartigem Gerät. Gleichzeitig wird eine Dichtungssohle eingebaut. Dabei wird das vortriebsseitig hereingewonnene Gestein versatzseitig hinter dem Gerät verpreßt. Überschüssiges Gestein wird nach übertage verbracht. Über die Dichtungssohle ablaufendes Sickerwasser könnte über die Hauptstrecke abgezogen werden. - Die vorstehend beschriebenen bekannten Maßnahmen sind aufwendig, zumal sie von übertage aus weder durchgeführt oder unterstützt noch gesteuert werden können.

Im Rahmen von anderen, aus der Praxis bekannten Maßnahmen, werden beidseits und unterhalb der Deponie zwei zumeist in Längsrichtung der Deponie verlaufende Strecken aufgefahren. Mit Hilfe der Strebmaschine wird unterhalb der Deponie ein im wesentlichen waagerecht oder in bezug auf die Horizontale leicht schräg verlaufender Schlitzraum aufgefahren, der nicht nach übertage geführt ist. Strebmund und Strebmündung schließen vielmehr an die Strecke an. Die Strecken schließen an Schächte an. Auch diese Maßnahmen sind aufwendig. Sie verlangen die gesamte Technologie eines bergbaulichen Untertagebetriebes mit Gewinnungsstreb, Strecken und Schächten und zusätzlich die abdichtungstechnischen Einrichtungen und Arbeiten. Die bekannten Maßnahmen erfüllen trotz des großen technologischen Aufwandes ohne weiteres in abdichtungstechnischer Hinsicht die Anforderungen nicht. Tatsächlich wird unter der Deponie lediglich ein Abdichtungsboden erzeugt. Eine vollständige Kapselung wird durch die beschriebenen Maßnahmen nicht erreicht. Um eine solche Kapselung einzurichten, müssen an den Abdichtungsboden randseitig vertikale Abdichtungswände angeschlossen werden, die den Abdichtungsboden gleichsam zu einem oben offenen Abdichtungskasten ergänzen. Das sind zusätzliche Maßnahmen, die mit Schlitzwandmaschinen und Aggregaten der Tiefbautechnik aufwendig verwirklicht werden müssen.

Ausgehend von den eingangs beschriebenen bekannten Maßnahmen liegt der Erfindung die Aufgabe zugrunde, das Verfahren so zu führen, daß die durchzuführenden Maßnahmen von übertage aus unterstützbar sind und daß mit wesentlich vereinfachter Technologie ein allen Anforderungen genügendes Abdichtungsbauwerk errichtet werden kann.

Zur Lösung dieser Aufgabe lehrt die Erfindung, daß der Schlitzraum quer zur Hauptstrecke sowie von der Hauptstrecke ausgehend nach übertage als bergbautechnischer Strebbetrieb mit Strebmaschinen in Form einer Hereingewinnungsmaschine, einer Fördereinrichtung und eines Ausbaus augefahren wird, dessen Strebmündung in der Hauptstrecke angeordnet ist und dessen Strebmund zutage tritt, daß das mit der Hereingewinnungsmaschine hereingewonnene Gestein mit Hilfe der Fördereinrichtungen über die Strebmündung in die Hauptstrecke eingeführt und in dieser nach übertage verbracht wird und daß zumindest der Verfüllstoff des Abdichtungsbauwerkes über den übertägigen Strebmund in den Schlitzraum eingeführt wird. - In der Formulierung, daß Strebmaschinen eingesetzt werden, kommt lediglich zum Ausdruck, daß diese Maschinen den in einem bergbaulichen Gewinnungsstreb eingesetzten Maschinen ähnlich sind. Sie entsprechen ihnen weitgehend in funktioneller Hinsicht. In baulicher Hinsicht und in bezug auf die Maße kann eine Anpassung an die speziellen Verhältnisse erfolgen, die im Rahmen der Erfindung zu berücksichtigen sind. Eine typische Hereingewinnungsmaschine in Form einer Schrämmaschine mit Schrämwalze und Fördereinrichtung sowie bewährte Ausbaueinrichtungen und Versatzeinrichtungen sind beispielsweise beschrieben in den Standardwerken der Bergbaukunde und Bergbautechnik. Eine typische Hereingewinnungsmaschine ist aber auch eine sogenannte Gewinnungshelix.

Die Erfindung beruht auf der Erkenntnis, daß mit den beschriebenen bergbautechnischen Maßnahmen auf sehr einfache Weise unterhalb einer Deponie ein Abdichtungsbauwerk erstellt werden kann. Dabei werden die bergbautechnischen Maßnahmen, mit denen der Schlitzraum erzeugt wird, beachtlich vereinfacht, da wesentliche Maßnahmen dieser Technologie übertage eingerichtet und durchgeführt werden können. Das gilt insbesondere für das Einbringen des Verfüllstoffes und die abdichtungstechnischen Maßnahmen.

Wird in der beschriebenen Art und Weise eine Abdichtungswanne hergestellt, so ist diese stirnseitig und endseitig noch offen. Ein abdichtungstechnischer Abschluß ist an einer Seite dadurch erreichbar, daß die Hauptstrecke ihrerseits gegenüber der Horizontalen schräg geführt ist, bis sie bei ausreichendem Abstand von der Deponie zutage tritt. An der anderen Seite kann eine Schlitzwand die Wanne abschließen. Die Hauptstrecke wird man regelmäßig leicht geneigt anordnen, um eintretendes Sickerwasser über Gefälle abführen zu können.

Je nach den geologischen Verhältnissen und den Grundwasserverhältnissen genügt es, in die Hauptstrecke nur an einer Seite einen nach übertage geführten Schlitzraum anzuschließen, um eine ausreichende Kapselung zu bewirken. Nach bevorzugter Ausführungsform der Erfindung wird jedoch an die Hauptstrecke beidseits ein nach übertage geführter Schlitzraum angeschlossen. Vorzugsweise wird dadurch unter der Deponie ein schiffsrumpfartiges Abdichtungsbauwerk eingerichtet.

Im einzelnen bestehen im Rahmen der Erfindung mehrere Möglichkeiten der weiteren Ausbildung und Gestaltung des Verfahrens. So kann die Hauptstrecke vor und hinter der Deponie an Schächte angeschlossen werden, die nach übertage führen. Hier kann der stirnseitige und endseitige Abschluß, wie schon angedeutet, über Schlitzwände verwirklicht werden. Eine bevorzugte Ausführungsform der Erfindung ist dadurch gekennzeichnet, daß die Hauptstrecke von und hinter der Deponie an Schrägschächte und/oder Gefällestreckenabschnitte angeschlossen wird, die nach übertage führen. Es versteht sich fernerhin, daß die Hauptstrecke und/oder die Schächte und/oder die Gefällestreckenabschnitte bergbautechnisch ausgebaut werden. Bei der Ausführungsform des erfindungsgemäßen Verfahrens, bei der ein schiffsrumpfartiges Abdichtungsbauwerk eingebracht wird, kann auf tiefbautechnisch niedergebrachte Schlitzwände und gegebenenfalls auch auf Schächte vollständig verzichtet werden.

Die bergbaulichen Arbeiten können mit bewährten Einrichtungen und Maschinen durchgeführt werden. So ist eine Ausführungsform der Erfindung dadurch gekennzeichnet, daß in dem Strebbetrieb mit einem Kettenkratzförderer gearbeitet wird, auf dessen Förderrinne eine Schrämmaschine geführt wird, wobei die Antriebsaggregate für den Kettenkratzförderer und die Schrämmaschine im Bereich des zuvor erzeugten Strebmundes übertage angeordnet werden, und daß in dem Strebbetrieb an die Förderrinne Schreitausbaugestelle angeschlossen werden, die nach Maßgabe des wandernden Strebbetriebes, der fortschreitenden Hereingewinnung des Gesteins folgend, gesteuert werden. Dabei können an die Schreitausbaugestelle ausbaugestellartige Hilfskästen angeschlossen werden, die zum Einbringen von Abdichtungsbauelementen eingerichtet sind, wobei die Abdichtungsbauelemente, z. B. in Form von Abdichtungsfolien, in den Hilfskästen untergebracht sowie zusammen mit dem Verfüllstoff von übertage eingeführt und in den Schlitzraum eingebracht werden.

Eine andere Ausführungsform der Erfindung ist in bergbautechnischer Hinsicht dadurch gekennzeichnet, daß in dem Strebbetrieb jeweils mit einer Hereingewinnungsmaschine nach Art einer Gewinnungshelix gearbeitet wird, die ein Gewinnungsschneckenaggregat und zur Hauptstrecke hin angeschlossene ausbaugestellartige Ausbaukästen sowie Fördereinrichtungen für das hereingewonnene Gestein aufweist, daß die Gewinnungshelix mit Hilfe von Zugmitteln, die in einer oder mehreren Hilfsbohrungen nach übertage geführt sind, in einem Gewinnungsstrebabschnitt geführt wird und daß der Verfüllstoff sowie die Abdichtungsbauelemente und/oder die Drainageelemente in den jeweils freigeschnittenen Gewinnungsstrebabschnitt über dessen Strebmund von übertage eingebracht werden. Dabei können in dem freigeschnittenen Gewinnungsstrebabschnitt verlorene Ausbauelemente angeordnet werden, die zugleich Abdichtungsbauelemente und/oder Drainageelemente aufnehmen und/oder führen können

Weitere Vorteile lassen sich dadurch erreichen, daß mit Hereingewinnungsmaschinen gearbeitet wird, die im Gestein Rinnen freischneiden, wobei in die Rinnen von übertage aus Drainageelemente in Form von Drainagerohren eingeführt werden.

Im folgenden werden das erfindungsgemäße Verfahren sowie Maschinenanordnungen für die Durchführung des Verfahrens anhand einer lediglich ein Ausführungsbeispiel darstellenden Zeichnung ausführlicher erläutert. Es zeigen

Fig. 1  einen Längsschnitt durch eine Deponie mit Hauptstrecke,

Fig. 2     in gegenüber der Fig. 1 vergrößertem Maßstab und perspektivisch ergänzt, einen Querschnitt durch die in Fig. 1 dargestellte Deponie mit angedeuteten Strebbetrieben,

Fig. 3     den vergrößerten Ausschnitt A aus dem Gegenstand der Fig. 2 mit einer Maschinenanordnung für die Durchführung des erfindungsgemäßen Verfahrens,

Fig. 4     etwa im Maßstab der Fig. 3 und perspektivisch ergänzt, einen Schnitt in Richtung B-B durch den Gegenstand der Fig. 3,

Fig. 5     eine andere Ausführungsform des Gegenstandes der Fig. 4,

Fig. 6     in gegenüber der Fig. 5 verkleinertem Maßstab eine Ansicht des Gegenstandes der Fig. 5 in anderer Funktionsstellung,

Fig. 7     entsprechend der Fig. 6 den Gegenstand der Fig. 5 in nochmals anderer Funktionsstellung,

Fig. 8     in gegenüber der Fig. 3 verkleinertem Maßstab eine Draufsicht in Richtung C auf eine andere Maschinenanordnung zur Durchführung des erfindungsgemäßen Verfahrens.

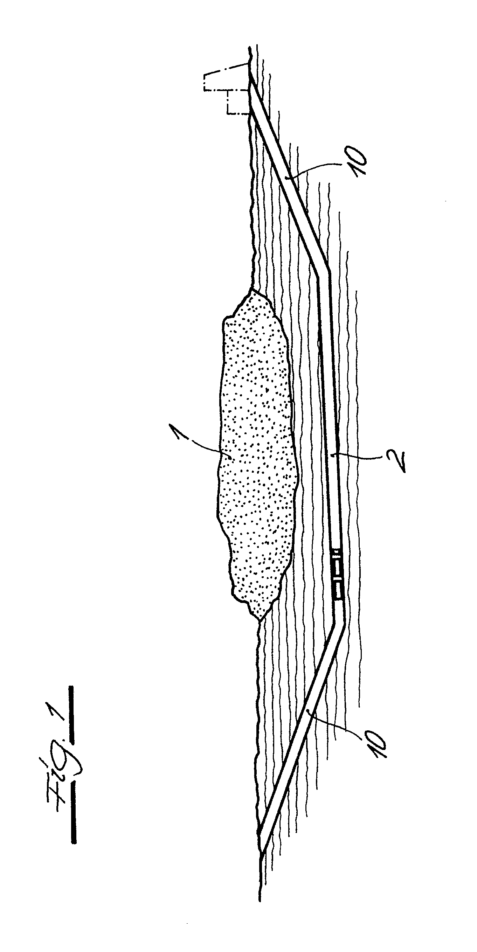

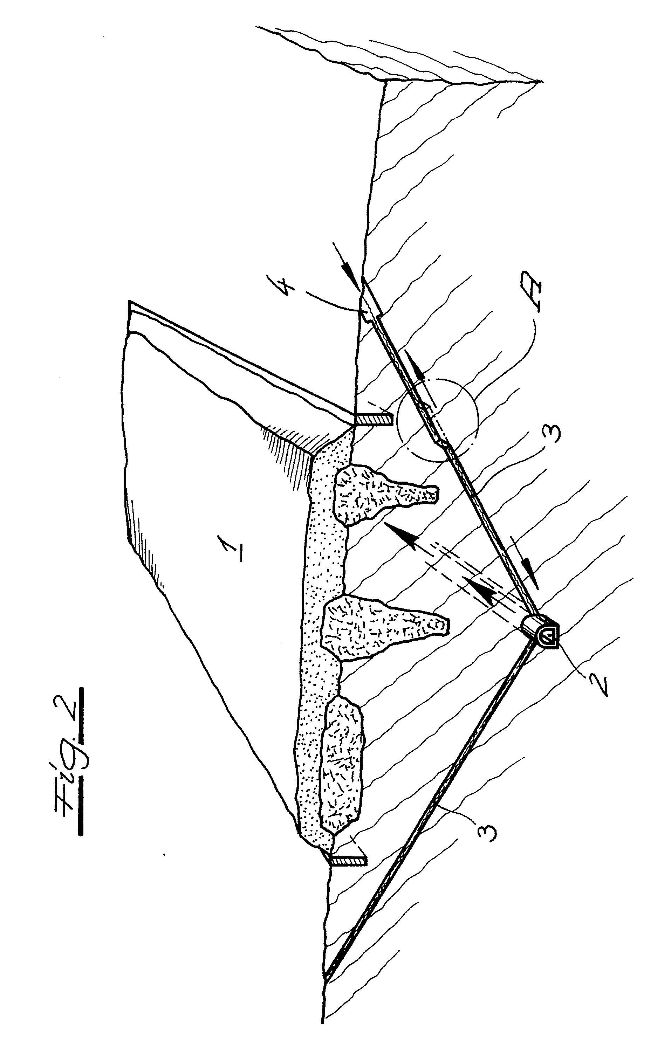

In den Fig. 1 und 2 erkennt man eine Deponie 1, die in üblicher Weise angelegt worden ist. Es gilt, diese Deponie 1 durch ein die Deponie ausreichend einfassendes unterirdisches Abdichtungsbauwerk zu sichern. Aus einer vergleichenden Betrachtung der Fig. 1 und 2 entnimmt man, daß im Ausführungsbeispiel in einer Achsrichtung im Bereich der Mitte unterhalb der Deponie 1 eine Hauptstrecke 2 aufgefahren wurde. Diese dient zum Abtransport von bei der Erzeugung des Schlitzraumes 3 hereingewonnem Gestein und zur Weiterführung. Aus der Fig. 2 entnimmt man, daß an die Hauptstrecke 2 von einem Streckenende beginnend, beidseits quer zur Hauptstrecke 2 abgehende schräg nach oben führende Schlitzräume 3 angeschlossen sind. Aus einer vergleichenden Betrachtung der Fig. 2 sowie 3 bis 5 entnimmt man, wie die Schlitzräume 3 aufgefahren wurden. Es wurden dazu an die Hauptstrecke 2 wandernde Strebbetriebe angeschlossen, die neben der Deponie 1 mit einem übertägigen Strebmund 4 zutage treten. Es wird dazu insbesondere auf den Ausschnitt A verwiesen. In diesen Strebbetrieben arbeiten Strebmaschinen, nämlich jeweils eine Hereingewinnungsmaschine 5, eine Fördereinrichtung 6, Ausbaueinrichtungen 7 und Versatzeinrichtungen 8. Das mit den Hereingewinnungsmaschinen 5 hereingewonnene Gestein wird mit Hilfe der Fördereinrichtung 6 in die Hauptstrecke 2 eingeführt und in dieser nach nach übertage verbracht. Das deuten in der Fig. 2 entsprechende Pfeile an. Im übrigen wird zumindest der Verfüllstoff 9 des Abdichtungsbauwerkes über den übertägigen Strebmund 4 in den Schlitzraum 3 eingeführt Auch das wurde in Fig. 2 durch Pfeile dargestellt. Im Ausführungsbeispiel ist die Anordnung so getroffen, daß die Hauptstrecke 2 vor und hinter der Deponie 1 Schrägschächte 10 oder Gefällestreckenabschnitte aufweist, die nach übertage führen. Das erkennt man inbesondere in der Fig. 1. Es versteht sich, daß die Hauptstrecke 2 und/oder die Schächte 10 und/oder die Gefällestreckenabschnitte bergbautechnisch aufgebaut sind. Vergleicht man die Fig. 1 und 2, so erkennt man, daß die Figuren diejenige Verfahrensweise des erfindungsgemäßen Verfahrens beschreiben, bei der unter der Deponie 1 ein schiffsrumpfartiges Abdichtungsbauwerk entsteht.

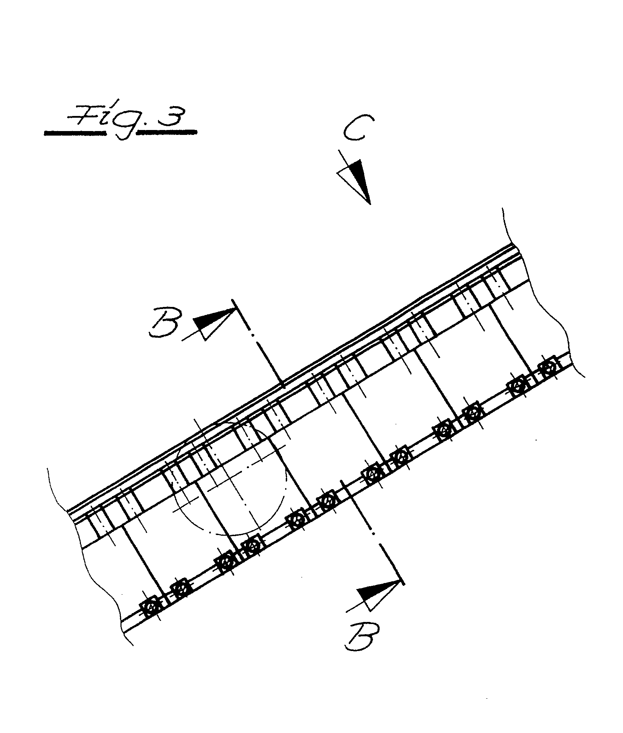

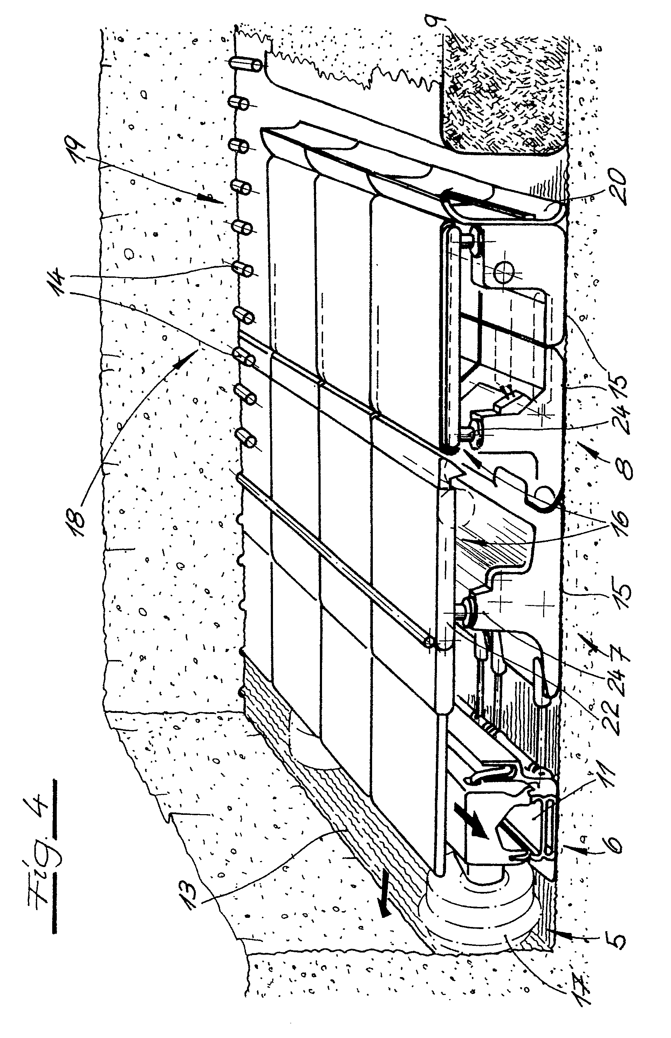

Einzelheiten der Einrichtung der Strebbetriebe entnimmt man aus einer vergleichenden Betrachtung der Fig. 3 und 4. Man erkennt, daß in dem Strebbetrieb mit einem Kettenkratzförderer 6 gearbeitet wird, auf dessen Förderrinne 11 eine Schrämmaschine 5 als Hereingewinnungsmaschine geführt ist. Die Antriebsaggregate für die Kettenkratzförderer 6 und die Schrämmaschine 5 befinden sich im Bereich des zuvor erzeugten Strebmundes 4 übertage, wie in Fig. 2 angedeutet wurde. Im Strebbetrieb sind an die Förderrinne 11 Schreitausbaugestelle 7 als Ausbaueinrichtungen angeschlossen, die nach Maßgabe des wandernden Strebbetriebes, der fortschreitenden Hereingewinnung des Gesteins folgend, gesteuert werden. An die Schreitausbaugestelle 7 sind als Versatzeinrichtungen ausbaugestellartige Hilfskästen 8 angeschlossen, die zum Einbringen von Versatz und Abdichtungsbauelementen eingerichtet sind, wobei die Abdichtungsbauelemente in Form von Abdichtungsfolien 12 in den Hilfskästen 8 untergebracht sind. Sie werden, wie der Verfüllstoff 9, von übertage eingeführt und in den Schlitzraum 3 eingebracht. Insbesondere in der Fig. 4 erkennt man auch, wie der Verfüllstoff 9 blasversatzseitig eingebracht wird.

In der Fig. 4 wurde fernerhin dargestellt, daß mit einer Hereingewinnungsmaschine 5 gearbeitet wird, die im Gestein Rinnen 13 freischneidet. In die Rinnen 13 werden von übertage aus Drainageelemente in Form von Drainagerohren 14 eingeführt. Der Verfüllstoff 9 ist als Abdichtungsgemisch aufgebaut und wird als Abdichtungsschicht eingebracht. Die zusätzliche Abdichtung erfolgt über die Abdichtungsfolien 12, die beispielsweise Kunststoffbahnen sind. Sickerwasser tritt in die Drainagerohre 14 ein und wird der Hauptstrecke 2 zugeführt.

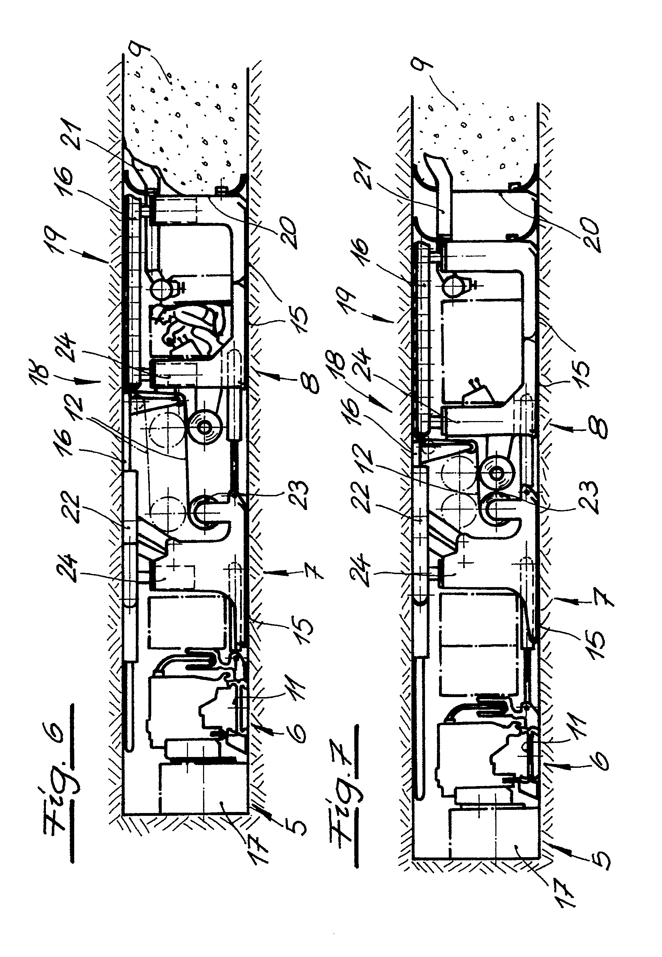

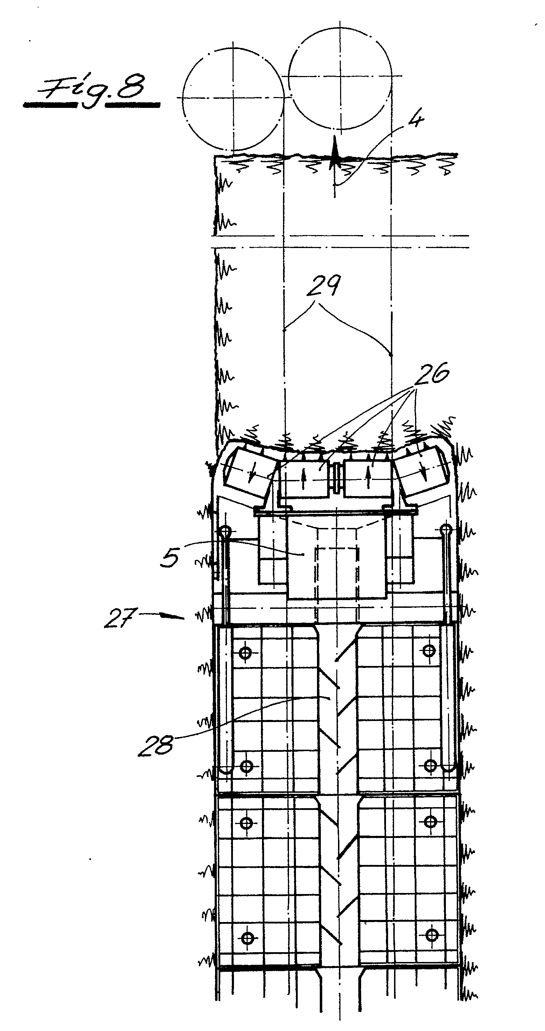

In bezug auf die Maschinenanordnung zur Durchführung des erfindungsgemäßen Verfahrens im einzelnen wird zunächst auf die Fig. 6 und 7 verwiesen. Die dargestellte Maschinenanordnung ist Gegenstand der Ansprüche 11 bis 14. Man erkennt in den Fig. 6 und 7 ein System von Schreitausbaugestellen 7 mit Liegendkufen 15 und Hangendkappen 16 nach Art von Strebausbaugestellen eines bergbaulichen Untertagebetriebes, ein Maschinenaggregat aus einem Kettenkratzförderer 6 und einer darauf geführten Gewinnungsmaschine 5 mit Schrämwalze 17 und eine Einrichtung 18 zum Einbringen des Verfüllstoffes 9, die einen versatzseitig an jeweils ein Schreitausbaugestell angeschlossenen Hangendstützkasten 18 sowie einen daran angeschlossenen Versatzschildstützkasten 19 mit Versatzschild 20 und Verfüllstoffführungsrohren 21 aufweist. Die Schreitausbaugestelle 7 sind nach Maßgabe des Schlitzraumvortriebes nachrückbar. Die Hangendstützkästen 18 sind an die Schreitausbaugestelle 7 um eine zur Vortriebsrichtung orthogonale und in der Vortriebsebene liegende Achse gelenkig angeschlossen. Die Versatzschildstützkästen 19 sind an die Hangendstützkästen 18 mit einem Nachholschritt-Freiheitsgrad angeschlossen und über Nachhol-Zylinderkolbenanordnungen 22 nach Maßgabe der vorgegebenen Dicke von in Vortriebsrichtung einzubringenden Schichten aus Verfüllstoff 9 nachholbar.

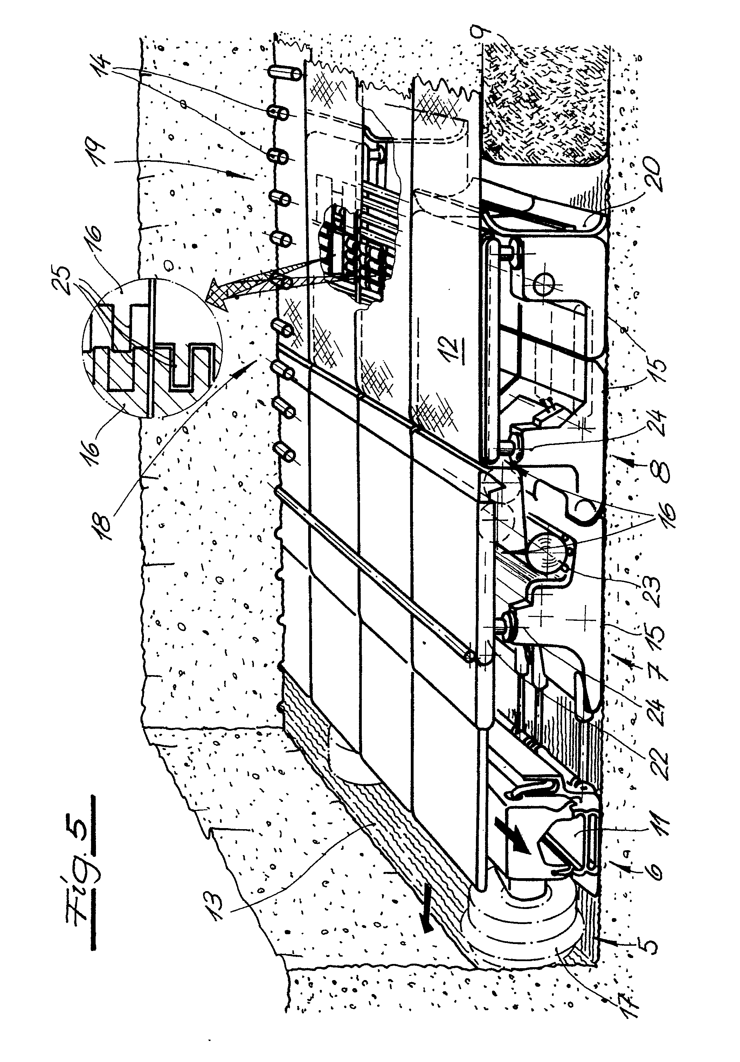

In den Fig. 6 und 7 erkennt man, daß die Schreitausbaugestelle 7 jeweils versatzseitig eine Coilaufnahme für eine Abdichtungsfolienrolle 23 aufweisen und daß diese Abdichtungsfolie 12 über einen Schlitz dem versatzseitigen Ende der Hangendkappe 16 des Schreitausbaugestelles 7 und dem angeschlossenen Hangendstützkasten 18 auf dem Hangendstützkasten 18 und dem daran angeschlossenen Versatzschildkasten 19 sowie dadurch hangendseitig in den verfüllten Schlitzraum 3 eingeführt ist. Die Hangendstützkästen 18 und die Versatzschildstützkästen 19 sind strebausbaugestellartig mit Liegendkufen 15 und Hangendkappe 16 ausgeführt. Die Hangendkappen 16 sind mit Hubzylinderkolbenanordnungen 24 ausgerüstet. Man erkennt in dem vergrößerten Ausschnitt bei Fig. 5, daß die Hangendkappe 16 der Hangendstützkästen 18 versatzseitig und die Hangendkappe 16 der Versatzschildstützkästen 19 vortriebsrichtungsseitig mit Führungselementen 25 kammartig ineinanderpassen und daß dadurch der Nachhol-Freiheitsgrad verwirklicht ist.

Fig. 8 verdeutlicht, daß das erfindungsgemäße Verfahren auch mit anderen Gewinnungsmaschinen durchgeführt werden kann. Man erkennt, daß in den Strebbetrieben jeweils mit einer Hereingewinnungsmaschine 5 mit Gewinnungshelix 26 gearbeitet wird, die zur Hauptstrecke 2 hin angeschlossene, ausbaugestellartige Ausbaukästen 27 sowie Fördereinrichtungen 28 für das hereingewonnene Gestein aufweist. Die Gewinnungshelix 26 ist mit Hilfe von Zugmitteln 29, die in einer oder mehreren Hilfsbohrungen nach übertage geführt sind, geführt. Der Verfüllstoff 9 sowie die Abdichtungsbauelemente und/oder Drainageelemente werden in den jeweils freigeschnittenen Gewinnungsstrebabschnitt über dessen Strebmund 4 von übertage aus eingebracht.

## Patentansprüche

1. Verfahren zur Sicherung einer Deponie durch ein die Deponie ausreichend unterfassendes und einfassendes unterirdisches Abdichtungsbauwerk, welches mit bergbautechnischen Hilfsmitteln eingebracht wird und eine in Längsrichtung des Abdichtungsbauwerkes verlaufende Hauptstrecke sowie an zumindest einer Seite einen an die Hauptstrecke angeschlossenen, nach übertage geführten Schlitzraum aufweist, wobei in dem Schlitzraum ein Verfüllstoff sowie ggf. Abdichtungsbauelemente und/oder Drainageelemente angeordnet sind, **dadurch gekennzeichnet,** daß der Schlitzraum quer zur Hauptstrecke sowie von der Hauptstrecke ausgehend nach übertage als bergbautechnischer Strebbetrieb mit Strebmaschinen in Form einer Hereingewinnungsmaschine, einer Fördereinrichtung und eines Ausbaus aufgefahren wird, dessen Strebmündung in der Hauptstrecke angeordnet ist und dessen Strebmund zutage tritt, daß das mit der Hereingewinnungsmaschine hereingewonnene Gestein mit Hilfe der Fördereinrichtungen über die Strebmündung in die Hauptstrecke eingeführt und in dieser nach übertage verbracht wird und daß zumindest der Verfüllstoff des Abdichtungsbauwerkes über den übertägigen Strebmund in den Schlitzraum einführbar ist.

2. Verfahren nach Anspruch 1, dadurch gekennzeichnet, daß die Hauptstrecke, vor und hinter der Deponie, an Schächte angeschlossen wird, die nach Übertage führen.

3. Verfahren nach Anspruch 1, dadurch gekennzeichnet, daß die Hauptstrecke, vor und hinter der Deponie, an Schrägschächte und/oder Gefällestreckenabschnitte angeschlossen wird, die nach übertage führen.

4. Verfahren nach einem der Ansprüche 1 bis 3, dadurch gekennzeichnet, daß die Hauptstrecke und/oder die Schächte und/oder die Gefällestreckenabschnitte bergbauüblich ausgebaut werden.

5. Verfahren nach einem der Ansprüche 1 bis 4, dadurch gekennzeichnet, daß an die Hauptstrecke beidseits ein nach übertage geführter Schlitzraum sowie unter der Deponie ein schiffsrumpfartiges Abdichtungsbauwerk eingebracht wird.

6. Verfahren nach einem der Ansprüche 1 bis 5, dadurch gekennzeichnet, daß in dem Strebbetrieb mit einem Kettenkratzförderer gearbeitet wird, auf dessen Förderrinne eine Schrämmaschine geführt wird, wobei die Antriebsaggregate für den Kettenkratzförderer und die Schrämmaschine im Bereich des zuvor erzeugten Strebmundes übertage angeordnet werden, und daß in dem Strebbetrieb an die Förderrinne Schreitausbaugestelle angeschlossen werden, die nach Maßgabe des wandernden Strebbetriebes, der fortschreitenden Hereingewinnung des Gesteins folgend, gesteuert werden.

7. Verfahren nach Anspruch 6, dadurch gekennzeichnet, daß in die Schreitausbaugestelle ausbaugestellartige Hilfskästen angeschlossen werden, die zum Einbringen von Abdichtungsbauelementen eingerichtet sind, und daß die Abdichtungsbauelemente in den Hilfskästen untergebracht sowie, ebenso wie der Verfüllstoff, von übertage eingeführt und in den Schlitzraum eingebracht werden.

8. Verfahren nach einem der Ansprüche 1 bis 5, dadurch gekennzeichnet, daß in dem Strebbetrieb mit einer Hereingewinnungsmaschine nach Art einer Gewinnungshelix gearbeitet wird, die ein Gewinnungsschneckenaggregat und zur Hauptstrecke hin angeschlossene ausbaugestellartige Ausbaukästen sowie Fördereinrichtungen für das hereingewonnene Gestein aufweist, daß die Gewinnungshelix mit Hilfe von Zugmitteln, die in einer oder mehreren Hilfsbohrungen nach übertage geführt sind, in einem Gewinnungsstrebabschnitt geführt wird und daß der Verfüllstoff sowie die Abdichtungsbauelemente und/oder die Drainageelemente in den jeweils freigeschnittenen Gewinnungsstrebabschnitt über dessen Strebmund von übertage eingebracht werden.

9. Verfahren nach Anspruch 8, dadurch gekennzeichnet, daß in dem freigeschnittenen Gewinnungsstrebabschnitt verlorene Ausbauelemente angeordnet werden.

10. Verfahren nach einem der Ansprüche 1 bis 9, dadurch gekennzeichnet, daß mit Hereingewinnungsmaschinen gearbeitet wird, die im Gestein Rinnen freischneiden, und daß in die Rinnen von übertage aus Drainageelemente in Form von Drainagerohren eingeführt werden.

11. Maschinenanordnung für die Durchführung des Verfahrens nach einem der Ansprüche 1 bis 7, - mit

einem System von Schreitausbaugestellen (7) mit Liegendkufen (15) und Hangendkappen (16) nach Art von Strebausbaugestellen eines bergbaulichen Untertagebetriebes,

einem Maschinenaggregat aus einem Kettenkratzförderer (6) und einer darauf geführten Gewinnungsmaschine (5) mit Schrämwalze (17) und

einer Einrichtung zum Einbringen des Verfüllstoffes (9), die einen versatzseitig an jeweils ein Schreitausbaugestell (7) angeschlossenen Hangendstützkasten (18) sowie einen daran angeschlossenen Versatzschildstützkasten (19) mit Versatzschild (20) und Verfüllstoffzuführungsrohren (21) aufweist,

wobei die Schreitausbaugestelle (7) nach Maßgabe des Schlitzraumvortriebes dem Maschinenaggregat nachrückbar sind, wobei die Hangendstützkästen (18) an die Schreitausbaugestelle (7) um eine zur Vortriebsrichtung orthogonale und in der Vortriebsebene liegende Achse gelenkig angeschlossen sind und wobei die Versatzschildstützkästen (19) an die Hangendstützkästen (16) mit einem Nachholschritt-Freiheitsgrad angeschlossen und über Nachhol-Zylinderkolbenanordnungen (22) nach Maßgabe der vorgegebenen Dicke von in Vortriebsrichtung einzubringenden Schichten aus Verfüllstoff (9) nachholbar sind.

12. Maschinenanordnung nach Anspruch 11, wobei die Schreitausbaugestelle (7) jeweils versatzseitig eine Coilaufnahme für eine Abdichtungsfolienrolle (23) aufweisen und diese Abdichtungsfolie (12) über einen Schlitz dem versatzseitigen Ende der Hangendkappe (16) des Schreitausbaugestelles (7) und dem angeschlossenen Hangendstützkasten (18) auf dem Hangendstützkasten (18) und dem daran angeschlossenen Versatzschildstützkasten (19) sowie dadurch hangendseitig in den verfüllten Schlitzraum (3) geführt ist.

13. Maschinenanordnung nach einem der Ansprüche 11 oder 12, wobei die Hangendstützkästen (18) und Versatzschildstützkästen (19) strebausbaugestellartig mit Liegendkufe (15) und Hangendkappe (16) ausgeführt sind und die Hangendkappen (16) mit Hubzylinderkolbenanordnungen (24) ausgerüstet sind.

14. Maschinenanordnung nach Anspruch 13, wobei die Hangendkappe (16) der Hangendstützkästen (18) versatzseitig und die Hangendkappe (16) der Versatzschildstützkästen (19) vortriebsrichtungsseitig mit Führungselementen (25) kammartig ineinanderfassen und dadurch der Nachholschritt-Freiheitsgrad verwirklicht ist.

Fig. 1

Fig. 2

EP 0 461 471 A2

Fig. 3

Fig. 4

_Fig. 5_

EP 0 461 471 A2

_Fig. 6_

_Fig. 7_

EP 0 461 471 A2

Fig.8